# FASCICULE DE BREVET EUROPEEN

(11) **EP 3 049 679 B1**
(45) Date de publication et mention de la délivrance du brevet: **11.07.2018**
(21) Numéro de dépôt: 14759208.3
(22) Date de dépôt: 05.09.2014
(51) Int. Cl.: F04F 5/20

(54) **CARTOUCHE POUR CIRCUIT PNEUMATIQUE ET DISPOSITIF DE PREHENSION A VENTOUSE COMPORTANT UNE TELLE CARTOUCHE**
KARTUSCHE FÜR EINE PNEUMATISCHE SCHALTUNG UND SAUGGREIFERVORRICHTUNG MIT EINER DERARTIGEN KARTUSCHE
CARTRIDGE FOR A PNEUMATIC CIRCUIT AND SUCTION GRIPPER DEVICE COMPRISING SUCH A CARTRIDGE

(30) Priorité: 23.09.2013 FR 1359133; 16.06.2014 FR 1455511
(43) Date de publication de la demande: 03.08.2016
(73) Titulaire: COVAL, 26120 Montelier (FR)
(72) Inventeur: MILHAU, Pierre, 26300 Chatuzange-le-Goubet (FR); CECCHIN, Michel, F-26120 Montelier (FR); JOGUET, Loïc, F-07130 SOYONS (FR)
(74) Mandataire: Lavaud, Thomas
(86) Numéro de dépôt international: PCT/EP2014/068991
(87) Numéro de publication internationale: WO 2015/039898

(56) Documents cités:
- DE-B3-102004 034 670
- FR-A1- 2 559 851
- FR-A1- 2 896 833
- FR-A1- 2 952 683
- JP-A- S63 183 300

## Description

L'invention concerne une cartouche pour circuit pneumatique pouvant être utilisée notamment comme générateur de vide. L'invention concerne en outre un dispositif de préhension à ventouse comportant une telle cartouche.

### ARRIERE PLAN DE L'INVENTION

Les générateurs de vide sont utilisés dans de nombreux domaines industriels (industrie automobile, pharmaceutique, etc.), par exemple pour des applications de manipulation ou de préhension de produits dans une chaîne de production.

Deux grandes familles de générateurs de vide sont principalement utilisées : les générateurs de vide électriques (pompes à vide) et les générateurs de vide pneumatiques.

Un générateur de vide pneumatique fonctionne en utilisant l'effet Venturi. Il comporte au moins une chambre contenant une buse au travers de laquelle s'écoule de l'air comprimé, le vide généré résultant d'une dépression créée par effet Venturi dans ladite chambre. Cette chambre est mise en communication pneumatique avec une ou plusieurs ventouses appliquées sur la surface du produit. Le générateur de vide aspire l'air contenu dans l'espace intérieur de ces ventouses et solidarise celles-ci à la surface dudit produit lorsque les ventouses sont appliquées contre ladite surface. Ceci permet une manipulation ou une préhension du produit. Le générateur de vide est aussi souvent adapté à souffler de l'air dans l'espace intérieur des ventouses pour les désolidariser du produit une fois que la manipulation ou la préhension est achevée. UN générateur de l'art antérieur comme divulgué dans FR2896833 comporte coaxialement des moyens de pilotage pour communication pneumatique d'une première et deuxième chambre pour admission d'air comprimé et sortie d'air respectivement. La forme extérieure n'est pas mentionnée. Des moyens de connexion électrique sont situés à une extrémité du corps du générateur. Les utilisateurs de générateurs pneumatiques de vide ne sont eux-mêmes généralement pas des spécialistes de la technologie de génération du vide : il est donc important de concevoir des générateurs dont l'intégration dans une chaîne de production ne nécessite pas d'opérations complexes (connexions pneumatiques, gestion de l'étanchéité, etc.). Pour faciliter une telle intégration, il est de plus avantageux de permettre aux utilisateurs d'adapter facilement la forme extérieure de ces générateurs de vide à leurs applications et à leurs produits, de manière à optimiser l'intégration de ceux-ci dans la chaîne de production. Il est enfin souhaitable de réduire le coût d'une telle intégration pour rendre la technologie de génération du vide attractive.

### OBJET DE L'INVENTION

L'invention a pour but de simplifier l'intégration d'un générateur de vide dans une chaîne de production et de réduire le coût d'une telle intégration.

### RESUME DE L'INVENTION

En vue de la réalisation de ce but, on propose une cartouche pour circuit pneumatique comportant un corps tubulaire ayant une surface cylindrique permettant son insertion dans un logement cylindrique selon une direction axiale, la cartouche étant telle que dans ledit corps tubulaire sont intégrés coaxialement les uns aux autres:
- des moyens de connexion électrique situés à une première extrémité du corps tubulaire ;
- des moyens de pilotage alimentés et commandés via les moyens de connexion électrique ;
- une première chambre comportant un premier orifice latéral d'admission d'air comprimé ;
- au moins une deuxième chambre située à une deuxième extrémité du corps tubulaire et comportant un orifice de sortie d'air.

Les moyens de pilotage de la cartouche sont adaptés à mettre sélectivement en communication pneumatique la première chambre et la deuxième chambre de manière à autoriser un passage d'air vers la deuxième chambre.

Une telle cartouche pour circuit pneumatique peut être aisément intégrée dans un générateur de vide par l'utilisateur de ce générateur, qui doit uniquement concevoir dans le générateur un logement cylindrique pour insérer la cartouche. Cette intégration ne nécessite donc pas que l'utilisateur possède des connaissances poussées dans la technologie de génération de vide. De plus, il est relativement simple pour l'utilisateur de concevoir un générateur dont la forme extérieur corresponde parfaitement à un besoin particulier, puisque la seule contrainte structurelle associée à la génération de vide consiste en la réalisation du logement cylindrique de taille réduite pour loger la cartouche. La cartouche de l'invention peut être utilisée telle quelle pour souffler de l'air. Il est de plus possible de transformer cette cartouche de manière à pouvoir l'utiliser pour aspirer de l'air. Il suffit alors de prévoir un deuxième orifice pour aspirer de l'air à l'intérieur de la cartouche : on diminue ainsi le coût de l'intégration pour l'utilisateur.

On propose de plus un dispositif de préhension à ventouse, comportant une cartouche pneumatique adaptée à aspirer de l'air telle que précédemment évoquée, le dispositif comportant un corps dans lequel est ménagé un logement pour accueillir la cartouche, un conduit d'admission d'air comprimé débouchant dans le logement d'accueil, une chambre de vide qui débouche dans le logement d'accueil et qui est mise en communication pneumatique avec au moins une ventouse, des moyens d'étanchéité pour interdire toute circulation d'air entre le conduit d'admission et la chambre de vide par le logement d'accueil à l'extérieur de la cartouche, le dispositif étant agencé de sorte que :
- le premier orifice latéral de la cartouche est en communication pneumatique avec le conduit d'admission ;
- un deuxième orifice latéral de la deuxième chambre de la cartouche qui est en communication pneumatique avec la chambre de vide ;
- le dispositif est commandé par des moyens de commande externes via les moyens de connexion électrique de la cartouche.

### BREVE DESCRIPTION DES DESSINS

Il sera fait référence aux dessins annexés, parmi lesquels :
- la figure 1 représente schématiquement une vue en coupe d'une cartouche selon un premier mode de réalisation de l'invention, la cartouche étant agencée de manière à être normalement fermée, une vanne de coupure de la cartouche étant en position fermée ;
- la figure 2 représente schématiquement une vue en coupe de la cartouche selon le premier mode de réalisation, la vanne de coupure de la cartouche étant en position ouverte ;
- la figure 3 représente schématiquement une vue en coupe de la cartouche selon une variante du premier mode de réalisation, la cartouche étant agencée de manière à être normalement ouverte, la vanne de coupure de la cartouche étant en position ouverte ;
- la figure 4 représente schématiquement une vue en coupe de la cartouche selon cette variante du premier mode de réalisation, la vanne de coupure de la cartouche étant en position fermée ;
- la figure 5 représente une vue en perspective de la cartouche selon un deuxième mode de réalisation de l'invention, une vanne de coupure de la cartouche étant en position fermée ;
- la figure 6 représente une vue en perspective de la cartouche selon le deuxième mode de réalisation, une vanne de coupure de la cartouche étant en position ouverte ;
- la figure 7 représente une vue en perspective d'une cartouche de l'invention selon le deuxième mode de réalisation adaptée à souffler de l'air ;
- la figure 8 représente schématiquement une vue en coupe de la cartouche selon un troisième mode de réalisation ;
- la figure 9 représente une vue en coupe de la cartouche selon un quatrième mode de réalisation, un premier module de commande et un deuxième module de génération de vide de la cartouche étant associés ;
- la figure 10 représente une vue latérale analogue à la vue de la figure 9 ;
- la figure 11 représente une vue latérale de la cartouche selon le quatrième mode de réalisation, la cartouche étant ici constituée du seul premier module de commande ;
- la figure 12 est une vue en perspective analogue à la vue de la figure 11 ;
- la figure 13 représente une vue latérale de la cartouche selon le quatrième mode de réalisation, ladite cartouche étant ici constituée du deuxième module de génération de vide et d'une interface pneumatique ;
- la figure 14 représente un dispositif de préhension à ventouse de l'invention.

### DESCRIPTION DETAILLEE DE L'INVENTION

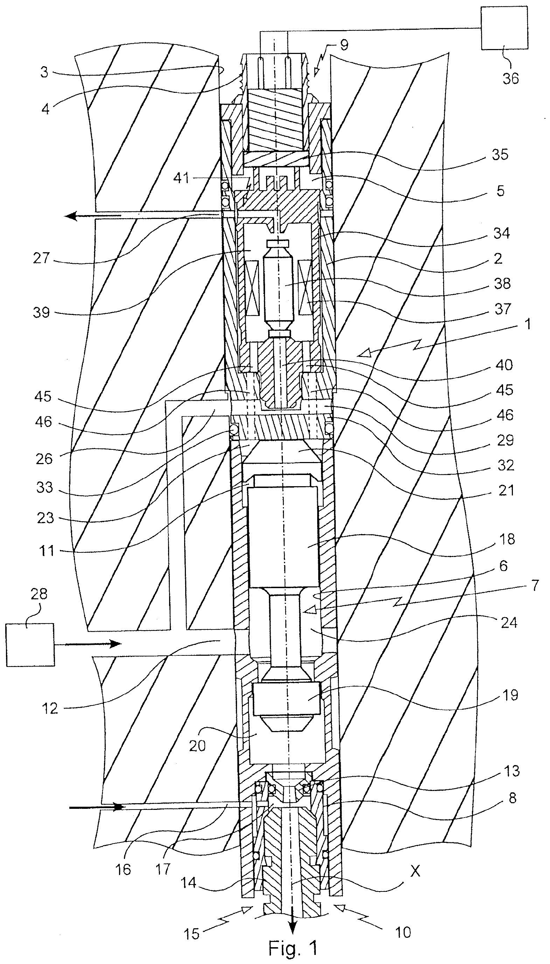

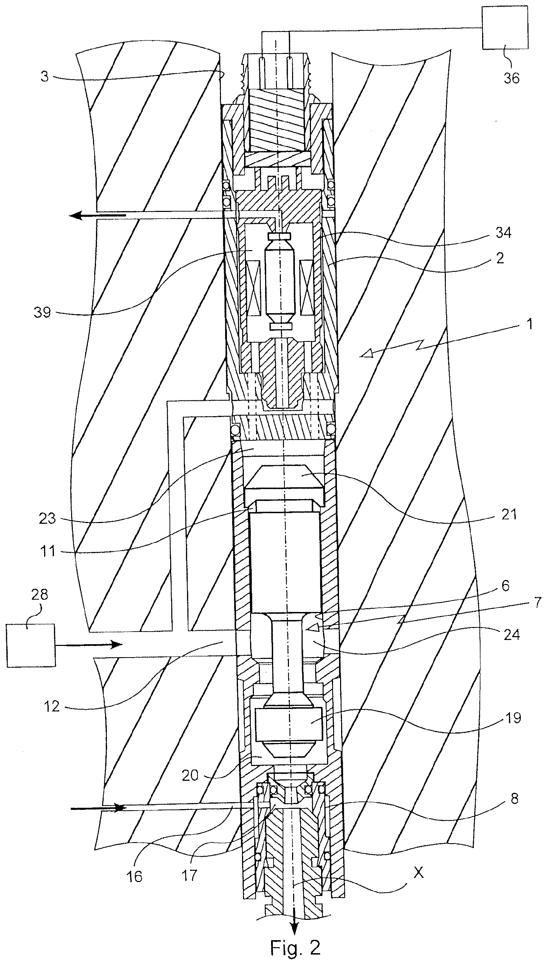

En référence aux figures 1 et 2, la cartouche 1 pour circuit pneumatique de l'invention selon le premier mode de réalisation comporte un corps tubulaire 2 ayant une surface externe cylindrique. Le corps tubulaire 2 de la cartouche 1 est ici inséré dans un logement cylindrique 3 d'un générateur de vide quelconque.

A l'intérieur de ce corps tubulaire 2 sont intégrés coaxialement les uns aux autres selon un axe X du corps tubulaire 2 : des moyens de connexion électrique 4, une enceinte de pilotage 5 comportant des moyens de pilotage, une première chambre 6 dans laquelle est agencée une première vanne de coupure 7, et une deuxième chambre 8 comportant des moyens de génération de vide.

Les moyens de connexion électrique 4 sont situés à une première extrémité 9 du corps tubulaire et la deuxième chambre à une deuxième extrémité 10 du corps tubulaire 2.

La cartouche 1 de l'invention est ici adaptée à générer du vide grâce aux moyens de génération de vide de la deuxième chambre 8 qui fonctionnent selon l'effet Venturi. Les moyens de génération de vide comportent une buse 13 rapportée dans la deuxième chambre 8. Ladite buse 13 a une extrémité débouchant dans la première chambre 6 et à l'opposé une extrémité débouchant dans la deuxième chambre 8 en regard d'une extrémité d'un mélangeur 14 coaxial à la buse 13. A l'intérieur de la deuxième chambre 8, les moyens de génération de vide forment entre la buse 13 et l'échangeur 14 un volume annulaire de dépression 17. Le mélangeur 14 s'étend dans la deuxième chambre 8 et s'étend dans une ouverture d'évacuation 15 de la deuxième chambre 8 située au niveau de la deuxième extrémité 10 du corps tubulaire 2 de sorte que le mélangeur 14 a une extrémité ouverte disposée à l'extérieur du corps 2. Les flèches représentées en traits épais sur les figures indiquent qu'il s'agit d'une entrée d'air ou d'une sortie d'air.

Un premier orifice latéral 12 est ménagé dans le corps 2 en regard de la première chambre 6 pour permettre une admission d'air comprimé dans la première chambre 6.

Le corps 2 est pourvu d'un deuxième orifice latéral 16 débouchant à l'intérieur du volume annulaire de dépression 17 pour mettre celui-ci en communication avec l'extérieur du corps 2.

L'air comprimé s'écoule de la première chambre 6 vers la deuxième chambre 8 au travers de la buse 13 en accroissant sa vitesse, ce qui créé une dépression dans le volume annulaire de dépression 17, ladite dépression générant une aspiration d'air au niveau du deuxième orifice latéral 16. L'air comprimé et l'air aspiré sont ensuite évacués de la cartouche au travers du mélangeur 14.

La première vanne de coupure 7 de la première chambre 6 est utilisée pour commander cette génération de vide ou, au contraire, pour l'interrompre. La première vanne de coupure 7 est ainsi adaptée à autoriser ou à interdire le passage d'air comprimé de la première chambre 6 vers la deuxième chambre 8.

La première vanne de coupure 7 est une vanne à deux positions, normalement fermée, avec un état stable correspondant à l'obturation de la communication entre la première chambre 6 et la deuxième chambre 8.

La première vanne de coupure 7 comporte un premier clapet 18 ayant une extrémité de bouchage 19. Le premier clapet 18 coulisse selon l'axe du corps 2 entre une position d'ouverture, visible sur la figure 1, dans laquelle un premier canal de communication 20 adapté à mettre en communication pneumatique la première chambre 6 et la deuxième chambre 8 est dégagé, et une position de fermeture, dans laquelle l'extrémité de bouchage 19 obture ledit canal de communication 20. Le premier clapet 18 comporte en outre une extrémité de pilotage 21. Le premier clapet définit à l'intérieur de la première chambre 6 un premier volume de pilotage 23 situé du côté de l'enceinte de pilotage 5, un deuxième volume de pilotage 24 situé du côté de la deuxième chambre 8, et un volume intermédiaire 11 mis en communication avec l'extérieur pour être continuellement sous pression atmosphérique. Le rôle de ces volumes sera expliqué plus tard.

Lorsque la première vanne de coupure 7 est dans son état stable, c'est à dire en position fermée, le canal de communication 20 est obturé, l'air comprimé ne peut atteindre la deuxième chambre 8 et la cartouche 1 ne génère pas de vide. Au contraire, lorsque la première vanne de coupure 7 est en position ouverte, la première chambre 6 et la deuxième chambre 8 sont en communication pneumatique ce qui permet de générer du vide.

La première vanne de coupure 7 est pilotée par les moyens de pilotage de l'enceinte de pilotage 5 et grâce au premier orifice latéral 12 de la première chambre 6, à un orifice de pilotage 26 et à un premier orifice d'échappement 27 débouchant à l'extérieur de la cartouche 1.

L'orifice de pilotage 26 est ici connecté pneumatiquement à des moyens d'alimentation 28 en air comprimé, tout comme le premier orifice latéral 12. L'orifice de pilotage 26 débouche dans une chambre de pilotage 29 située entre l'enceinte de pilotage 5 et un corps fixe annulaire 32 muni d'un joint d'étanchéité 33, ledit corps fixe annulaire 32 présentant une première face en regard de la chambre de pilotage 29 et une deuxième face en regard de la première chambre 6. Le premier orifice d'échappement 27 est ici situé dans l'enceinte de pilotage 5 à proximité des moyens de connexion électrique 4.

Les moyens de pilotage comportent quant à eux une vanne de pilotage 34, en l'occurrence une électrovanne de pilotage, ainsi qu'une carte électrique 35 connectée électriquement aux moyens de connexion électrique 4.

Le pilotage de la première vanne de coupure 7 est commandé par des moyens de commande externes 36, représentés schématiquement sur la figure 1, qui transmettent une tension d'alimentation ainsi que des signaux électriques de commande à la carte électrique 35 via les moyens de connexion électriques 4. La carte électrique 35 et l'électrovanne de pilotage 34 sont alimentées électriquement par la tension d'alimentation. Les signaux électriques de commande sont mis en forme par la carte électrique 35 et utilisés pour générer un courant de pilotage circulant dans une bobine électrique 37 de l'électrovanne de pilotage 34, ledit courant de pilotage étant transmis à la bobine électrique 37 lorsqu'une ouverture de la première vanne de coupure 7 et donc une génération de vide sont commandés par les moyens de commande externes 36.

La circulation du courant de pilotage dans la bobine 37 permet de déplacer un noyau magnétique 38 situé dans une chambre interne 39 de l'électrovanne de pilotage 34 entre une position de repos et une position active. Lorsque le noyau 38 est dans sa position de repos, il bouche une première extrémité d'un conduit central 40, l'autre extrémité dudit conduit central 40 débouchant dans la chambre de pilotage 29. Lorsque le noyau est dans sa position active, il bouche un deuxième conduit d'échappement 41 de la chambre interne de l'électrovanne de pilotage et en communication pneumatique avec le premier conduit d'échappement 27.

Lorsque le noyau 38 est dans sa position de repos, visible sur la figure 1, l'air comprimé remplit le deuxième volume de pilotage 24 de la première chambre 6 en s'écoulant au travers du premier orifice latéral 12, et la chambre de pilotage 29 via l'orifice de pilotage 26. Le premier volume de pilotage 23, quant à lui, n'est pas rempli d'air comprimé. Le deuxième volume de pilotage 24 est donc porté à une pression supérieure à celle du premier volume de pilotage 23, ce qui a pour effet de produire un effort sur le premier clapet 18 qui tend à rapprocher son extrémité de pilotage 21 du corps fixe annulaire 32 et à amener son extrémité de bouchage 19 dans la position dans laquelle elle obture le premier canal de communication 20 : le premier clapet 18 est donc positionné dans la position de fermeture et la première vanne de coupure 7 dans la position fermée. L'air comprimé n'atteint donc pas la deuxième chambre 8. L'air comprimé résiduel situé dans la chambre interne 39 de l'électrovanne de pilotage 34 est évacué par le deuxième orifice d'échappement 41 et par le premier orifice d'échappement 27.

Lorsque le noyau 38 est dans sa position active, visible sur la figure 2, l'air comprimé de la chambre de pilotage remplit la chambre interne 39 de l'électrovanne de pilotage 34 en s'écoulant via la chambre de pilotage 29 et le conduit central 40. Comme le deuxième conduit d'échappement 41 est bouché, l'air comprimé contenu dans la chambre interne 39 de l'électrovanne de pilotage 34 s'écoule vers le premier volume de pilotage 23 de la première chambre 6 au travers de deux premiers conduits excentrés 45 de l'électrovanne de pilotage 34 communiquant chacun avec un tube excentré 46 ayant une extrémité débouchant en regard du premier conduit excentré 45 associé et une extrémité débouchant dans le premier volume de pilotage 23 de la première chambre 6. Les tubes excentrés 46 traversent donc la chambre de pilotage 29 et le corps fixe annulaire 32.

Comme la surface de l'extrémité de pilotage 21 est plus importante que celle de l'extrémité de bouchage 19, la pression exercée par l'air comprimé sur l'extrémité de pilotage 21 est plus importante que celle exercée par l'air comprimé sur l'extrémité de bouchage 19, ce qui a pour effet de produire un effort sur le premier clapet18 qui tend à éloigner son extrémité de bouchage 19 de la position dans laquelle elle obture le premier canal de communication 20 : le premier clapet 18 est donc positionné dans la position d'ouverture et la première vanne de coupure 7 dans la position ouverte. L'air comprimé atteint donc la deuxième chambre 8, et la cartouche 1 génère du vide.

La cartouche 1 de l'invention selon le premier mode de réalisation précédemment décrit comporte donc une première vanne de coupure qui est « normalement fermée » : son état stable correspond à une vanne en position fermée qui n'autorise pas le passage d'air comprimé dans la deuxième chambre et donc la génération de vide.

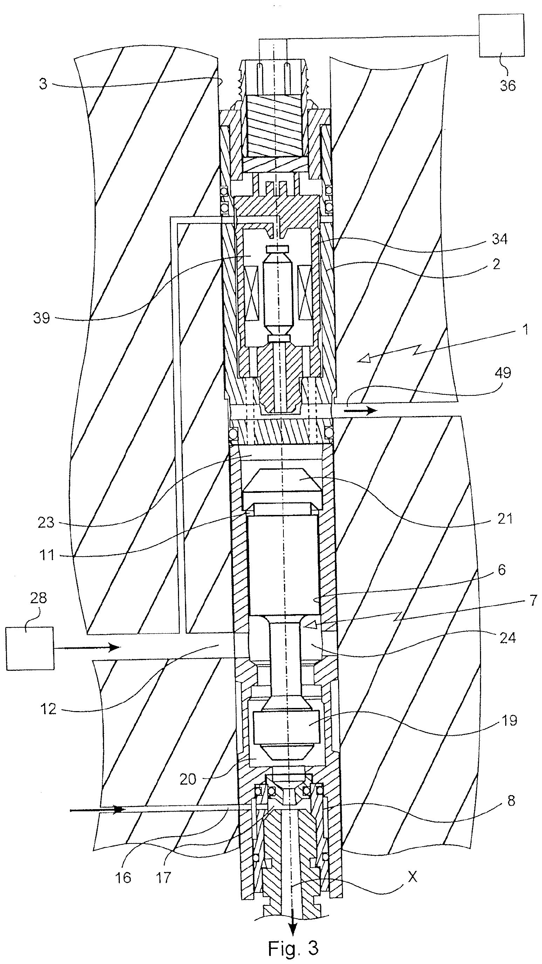

En référence à la figure 3, on peut facilement mettre en oeuvre l'invention de manière à obtenir une cartouche qui fonctionne avec une vanne de coupure qui est « normalement ouverte ».

Dans cette variante, on connecte pneumatiquement le premier orifice d'échappement 27 aux moyens d'alimentation 28 en air comprimé, tout comme le premier orifice latéral 12. L'orifice de pilotage 26 devient alors un troisième orifice d'échappement 49.

Lorsque le noyau 38 est dans sa position de repos, visible sur la figure 3, l'air comprimé remplit le deuxième volume de pilotage 24 de la première chambre 6 en s'écoulant au travers du premier orifice latéral 12, et la chambre interne 39 de l'électrovanne de pilotage 34 via le premier orifice d'échappement 27. Comme le conduit central 40 est bouché, l'air comprimé remplit le premier volume de pilotage 23 de la première chambre 6 via les premiers conduits excentrés 45 et les tubes excentrés 46. Comme la surface de l'extrémité de pilotage 21 de la vanne de coupure 7 est plus importante que celle de l'extrémité de bouchage 19, la pression exercée par l'air comprimé sur l'extrémité de pilotage 21 est plus importante que celle exercée par l'air comprimé sur l'extrémité de bouchage 19, ce qui a pour effet de produire un effort sur le premier clapet 18 qui tend à éloigner son extrémité de de bouchage 19 de la position dans laquelle elle obture le premier canal de communication 20 : le premier clapet 18 est donc positionné dans la position d'ouverture et la première vanne de coupure 7 dans la position ouverte. L'air comprimé atteint donc la deuxième chambre 8, et la cartouche à vide génère du vide.

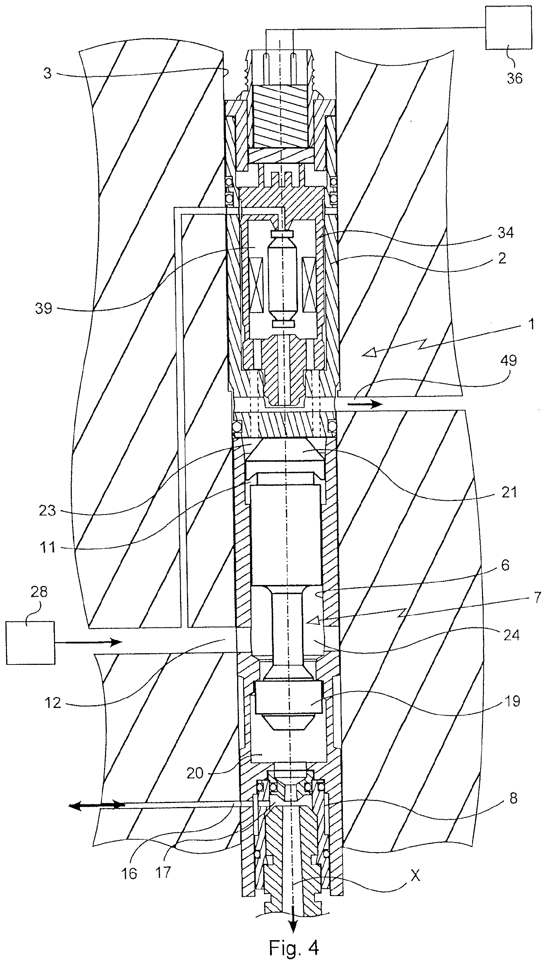

Lorsque le noyau 38 est dans sa position active, visible sur la figure 4, l'air comprimé ne peut s'introduire dans la chambre interne 39 au travers du deuxième orifice d'échappement 41 qui est bouché. L'air comprimé du premier volume de pilotage 23 de la première chambre 6 s'écoule au travers des tubes excentrés 46 et premiers conduits excentrés 45 dans la chambre interne 39 de l'électrovanne de pilotage 34, puis au travers du conduit central 40 jusqu'à la chambre de pilotage 29 de laquelle il est évacué au travers du troisième orifice d'échappement 49. La pression dans le deuxième volume de pilotage 24 de la première chambre 6 devient donc supérieure à celle dans le premier volume de pilotage 23 ce qui tend à amener l'extrémité de bouchage 19 du premier du clapet 18 dans la position dans laquelle elle obture le premier canal de communication 20 : le premier clapet 18 est donc positionné dans la position de fermeture et la première vanne de coupure 7 dans la position fermée.

On note ici que l'électrovanne de pilotage de la cartouche de l'invention selon le premier mode de réalisation visible sur les figures 1 à 4 présente un fonctionnement d'une vanne de type à trois orifices et deux positions.

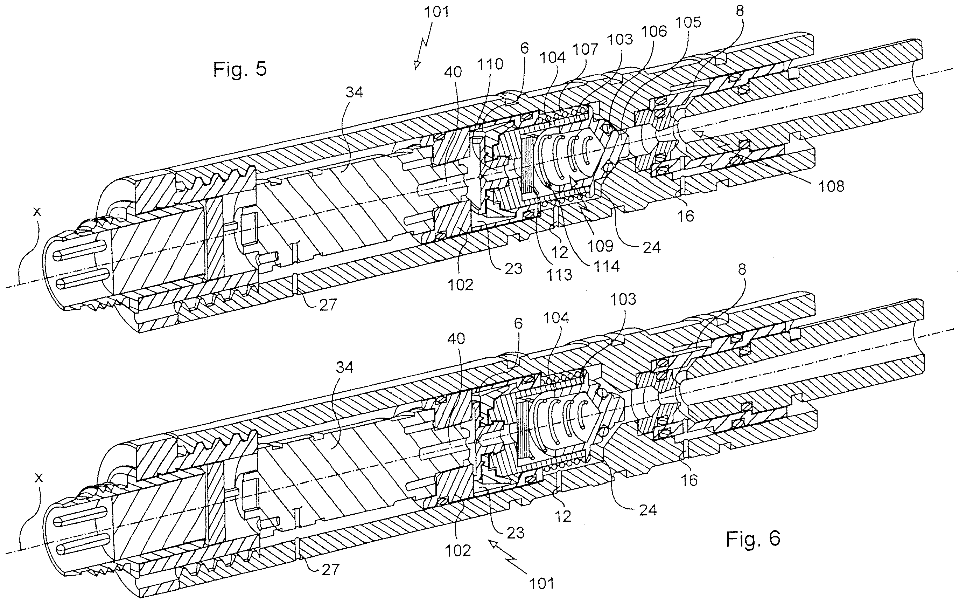

Dans un second mode de réalisation, visible sur les figures 5 et 6, la cartouche de l'invention est équipée d'une électrovanne de pilotage présentant un fonctionnement d'une vanne de type à deux orifices et deux positions.

La cartouche de l'invention 101 selon le second mode de réalisation comporte un certain nombre d'éléments semblables à ceux décrits précédemment pour le premier mode de réalisation, et dont les références sont conservées sur les figures 5 et 6.

On note tout de même un certain nombre de différences entre les deux modes de réalisation. Dans le second mode de réalisation, les premiers conduits excentrés de l'électrovanne de pilotage 34 sont bouchés et inutilisés. De plus, la cartouche 101 ne comporte pas de chambre de pilotage : le conduit central 40 de l'électrovanne de pilotage 34 débouche dans la première chambre 6, ledit conduit central 40 traversant ici un deuxième corps fixe annulaire 102. On note aussi que la cartouche 101 ne comporte plus d'orifice de pilotage. On note en outre que la vanne de coupure est une deuxième vanne de coupure 103 différente de la première vanne de coupure du premier mode de réalisation. La deuxième vanne de coupure 103 comporte un deuxième clapet 104 coulissant comportant une extrémité de bouchage 105 munie d'un joint 106, et un ressort de compression 107.

Le deuxième clapet 104 coulisse entre une position d'ouverture, visible sur la figure 5, dans laquelle un deuxième canal de communication 108 adapté à mettre en communication pneumatique la première chambre 6 et la deuxième chambre 8 est dégagé, et une position de fermeture, dans laquelle l'extrémité de bouchage 105 obture ledit canal 108. Le ressort de compression 107 tend à maintenir la deuxième vanne de coupure 103 en position fermée qui est son état stable. Le deuxième clapet 104 est creux, et définit à nouveau dans la première chambre le premier volume de pilotage 23 dans lequel débouche le conduit central 40 de l'électrovanne de pilotage 34, et le deuxième volume de pilotage 24.

Un volume interne 109 et un canal de fuite 110 sont définis à l'intérieur du deuxième clapet 104. Un filtre 113 et un ressort 114 de forme tronconique sont agencés dans le volume interne 109, de sorte que le ressort 114 maintient le filtre 113 en position en regard et à proximité immédiate du canal de fuite 110. Le canal de fuite 110 permet de mettre en communication pneumatique le premier volume de pilotage 23 et le deuxième volume de pilotage 24. L'air comprimé s'écoule donc depuis le deuxième volume de pilotage 24 dans le premier volume de pilotage 23 au travers du canal de fuite 110 en passant par le filtre 113 qui purifie l'air comprimé de manière à éviter que des impuretés ne bouchent le canal de fuite 110.

On décrit maintenant le fonctionnement de la cartouche 101 selon le deuxième mode de réalisation.

La position de repos du noyau de pilotage 38 de l'électrovanne de pilotage 34 correspond à nouveau à une position dans laquelle il bouche le conduit central 40, et la position active à une position dans laquelle il bouche le deuxième orifice d'échappement 41.

Ainsi, lorsque le noyau de pilotage 38 est en position de repos, visible sur la figure 5, l'air comprimé admis par le premier orifice latéral 12 remplit le deuxième volume de pilotage 24 de la première chambre 6, le volume interne 109 du deuxième clapet 104 et le premier volume de pilotage 23 via le canal de fuite 110. Comme des pressions relativement proches sont ainsi exercées sur les surfaces du deuxième clapet 104 situées dans le première volume 23 et dans le deuxième volume 24, et grâce à un effort de compression exercé par le ressort de compression 107, l'extrémité de bouchage 105 du deuxième clapet 104 obture le deuxième canal de communication 108 et la deuxième vanne de coupure 103 est en position fermée.

Lorsque le noyau de pilotage 38 est en position active, visible sur la figure 6, l'air comprimé contenu dans le premier volume de pilotage 23 s'échappe de celui-ci au travers du conduit central 40 de l'électrovanne de pilotage 34, et est évacué de la cartouche 101 au travers du deuxième orifice d'échappement 41 et du premier orifice d'échappement 27. La pression exercée par l'air comprimé sur la surface du deuxième clapet 104 située dans le deuxième volume de pilotage 24 est ainsi supérieure à l'effort de compression exercé par le ressort de compression 107 : l'extrémité de bouchage 105 du deuxième clapet 104 s'éloigne du deuxième canal de communication et la deuxième vanne de coupure 103 est en position ouverte.

On note que la cartouche selon le deuxième mode de réalisation, représentée sur les figures 5 et 6, comporte une deuxième vanne de coupure qui est « normalement fermée ». En modifiant l'électrovanne de pilotage, il est parfaitement possible de remplacer la deuxième vanne de coupure par une vanne de coupure « normalement ouverte ».

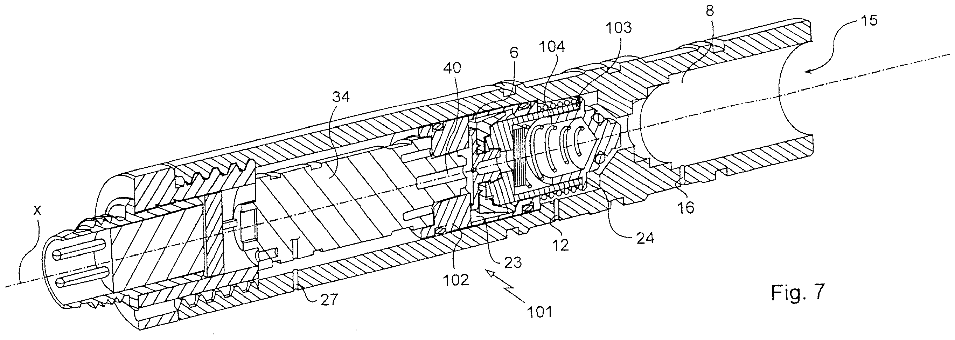

On remarque ici que la cartouche 1 décrite dans le premier mode de réalisation de l'invention et la cartouche 101 décrite dans le deuxième mode de réalisation de l'invention sont des cartouches adaptées à générer du vide. En référence à la figure 7, on observe cependant que si l'on retire de la deuxième chambre 8 les moyens de génération de vide, en l'occurrence la buse 13 et le mélangeur 14, on obtient une cartouche 101 adaptée à souffler de l'air au travers de l'ouverture d'évacuation 15 de la deuxième chambre 8. Le deuxième orifice latéral 16 est alors soit bouché, soit positionné en regard d'une surface obturant ledit deuxième orifice latéral. Ceci peut bien sûr aussi être réalisé sur une cartouche selon le premier mode de réalisation de l'invention.

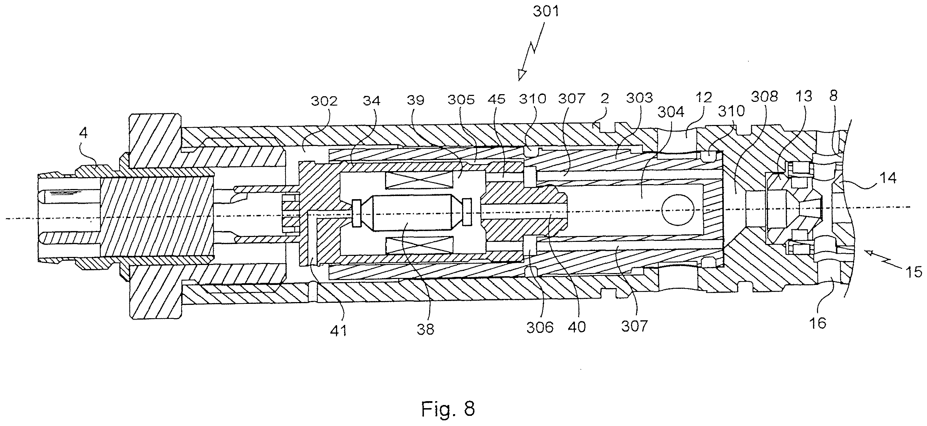

Dans un troisième mode de réalisation, visible sur la figure 8, la cartouche de l'invention 301 ne comporte cette fois-ci plus de vanne de coupure : les moyens de pilotage sont adaptés non seulement à commander sélectivement mais aussi à effectuer une mise en communication pneumatique d'une première et d'une deuxième chambre de manière à autoriser un passage d'air vers la deuxième chambre.

Tout comme les cartouches décrites plus tôt, la cartouche 301 du troisième mode de réalisation comporte un corps tubulaire 2 comprenant des moyens de connexion électrique 4 ainsi qu'une deuxième chambre 8 comportant des moyens de génération de vide, en l'occurrence une buse 13 et un mélangeur 14. Une chambre principale 302 s'étend entre les moyens de connexion électrique 4 et la deuxième chambre 8. Une pièce de révolution constituant une chemise 303 est insérée dans la chambre principale 302.

A l'intérieur de la chemise 303 sont définis un premier espace tubulaire 304 et un deuxième espace tubulaire 305 coaxiaux, une chambre de pilotage 306, ainsi que deux deuxièmes conduits excentrés 307 s'étendant le long du premier espace tubulaire 304 et débouchant à l'une de leur extrémité dans la chambre de pilotage 306 et à l'autre de leurs extrémités dans un troisième canal de communication 308 adapté à mettre en communication pneumatique la chambre principale 302 et la deuxième chambre 8.

Le premier espace tubulaire 304 définit une première chambre 304 ayant un rôle proche de celui des premières chambres précédemment décrite, ladite première chambre 304 ne comportant cependant pas de vanne de coupure.

Une électrovanne de pilotage 34, semblable aux électrovannes décrites ci-dessus et présentant un fonctionnement d'une vanne de type à trois orifices et deux positions, est positionnée à l'intérieur de la chemise 303.

L'électrovanne de pilotage 34 comporte un noyau de pilotage 38 situé dans une chambre interne 39, un deuxième orifice d'échappement 41, un conduit central 40 débouchant dans le premier espace tubulaire 304 et deux premiers conduits excentrés 45 débouchant dans la chambre de pilotage 306 en regard des deuxièmes conduits excentrés 307.

Des joints d'étanchéité 310 sont montés autour de la chemise 303 entre celle-ci et une surface intérieure du corps tubulaire 2 pour interdire tout passage d'air à l'extérieur de la chemise 303 entre la première chambre 304 et la deuxième chambre 8, et entre la première chambre 304 et la chambre principale 302.

Le corps tubulaire 2 comporte enfin un premier orifice latéral 12 et un deuxième orifice latéral 16 semblables à ceux précédemment décrits.

On décrit maintenant le fonctionnement de la cartouche selon le troisième mode de réalisation.

La position de repos du noyau de pilotage 38 de l'électrovanne de pilotage 34 correspond à nouveau à une position dans laquelle il bouche le conduit central 40, et la position active à une position dans laquelle il bouche le deuxième orifice d'échappement 41.

Ainsi, lorsque le noyau de pilotage 38 est en position de repos, l'air comprimé admis par le premier orifice latéral 12 remplit la première chambre et demeure à l'intérieur de celle-ci. L'air comprimé résiduel éventuellement situé dans la chambre interne 39 de l'électrovanne de pilotage 34 est évacué par le deuxième orifice d'échappement 41.

Lorsque le noyau de pilotage 38 est en position active, visible sur la figure 8, l'air comprimé remplit la chambre interne 39 via le conduit central 40 et gagne la deuxième chambre de la cartouche via les deux premiers conduits excentrés 45, la chambre de pilotage 306, les deux deuxièmes conduits excentrés 307 et le troisième canal de communication 308. L'air comprimé atteint donc la deuxième chambre 8, et la cartouche à vide génère du vide.

On observe à nouveau que si l'on retire de la deuxième chambre 8 les moyens de génération de vide, on obtient une cartouche 101 adaptée à souffler de l'air au travers de l'ouverture d'évacuation 15 de la deuxième chambre 8.

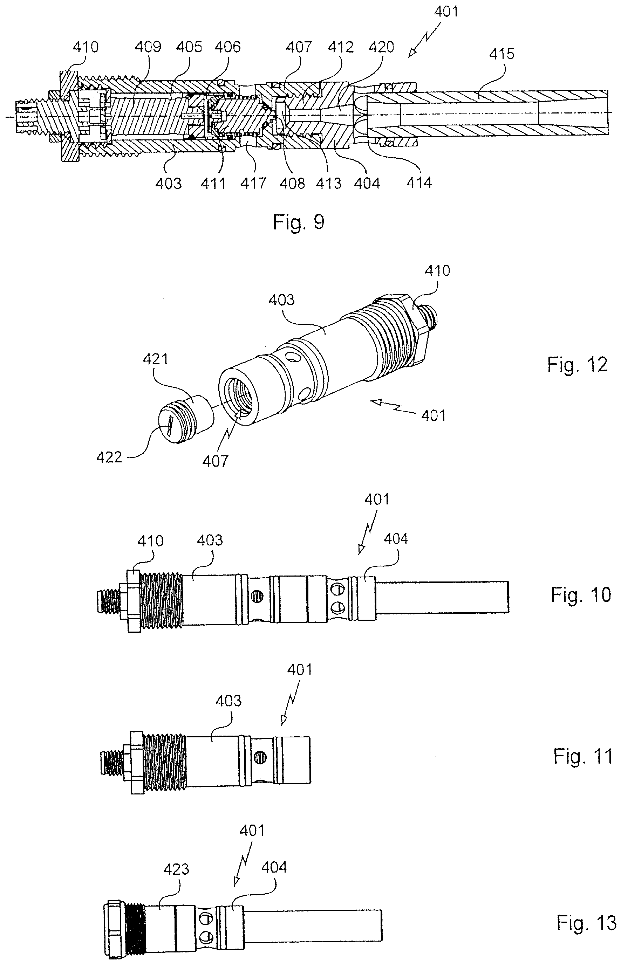

Dans un quatrième mode de réalisation, visible sur les figures 9 à 13, la cartouche de l'invention 401 est une cartouche configurable relativement proche structurellement de la cartouche de l'invention 101 selon le deuxième mode de réalisation, mais qui présente la particularité de pouvoir être configurée pour remplir sélectivement différentes fonctions.

La cartouche 401 comporte un premier module 403 et d'un deuxième module 404 séparables.

Le premier module 403 est un module de commande, à l'intérieur duquel sont définis une enceinte de pilotage 405, une première chambre 406, un premier orifice latéral 417, ainsi qu'une extrémité creuse taraudée 407 séparée de la première chambre 406 par un troisième canal de communication 408. L'enceinte de pilotage 405 comporte une électrovanne de pilotage 409 semblable à l'électrovanne de pilotage 34 et adaptée à piloter une vanne de coupure 411 agencée dans la première chambre 406. Des moyens de connexion électrique 410 semblables à ceux des autres modes de réalisation sont agencés sur le premier module 403.

Le deuxième module 404 est un module générateur de vide comportant une extrémité filetée 412 et à l'intérieur duquel sont définis une buse 413, un deuxième orifice latéral 414 et un mélangeur 415 coaxial à la buse 413.

Dans une première configuration, visible sur les figures 9 et 10, le deuxième module 404 est solidarisé au premier module 403 par vissage de l'extrémité filetée 412 dans l'extrémité creuse taraudée 407. La cartouche 401 est alors adaptée à être commandée via les moyens de connexion électrique 410 pour sélectivement générer du vide. L'électrovanne de pilotage 409 pilote la vanne de coupure 411 de manière à ce que celle-ci autorise une admission d'air comprimé via le premier orifice latéral 417. L'air comprimé s'écoule au travers de la buse 413 et génère une aspiration d'air au niveau du deuxième orifice latéral 414. On note ici que, tout comme dans les autres modes de réalisation, la cartouche 401 définit une deuxième chambre 420, qui s'étend ici en partie à l'intérieur de l'extrémité filetée 412 et en partie à l'intérieur du deuxième module 404.

Dans une deuxième configuration, visible sur les figures 11 et 12, le premier module 403 fonctionne de manière autonome, sans être associé au deuxième module 404. La cartouche 401 ne comporte plus de moyens de génération de vide, et est adaptée à souffler de l'air au travers de l'extrémité creuse taraudée 407. On prévoit de visser à l'intérieur de l'extrémité creuse taraudée 407 un embout de réglage 421 comportant un orifice de réglage 422 et permettant de régler le débit de l'air soufflé par la cartouche 401.

Enfin, dans une troisième configuration, visible sur la figure 13, le deuxième module 404 est à nouveau utilisé pour générer du vide, mais n'est pas associé au premier module 403. Le deuxième module 404 est vissé à l'intérieur d'une interface pneumatique 423 adapté à être connectée directement à une arrivée d'air comprimé. Dans cette troisième configuration, la cartouche 401 n'est plus commandée électriquement : elle permet uniquement de générer du vide à partir d'air comprimé lorsque de l'air comprimé traverse la cartouche 404 via l'interface pneumatique 423.

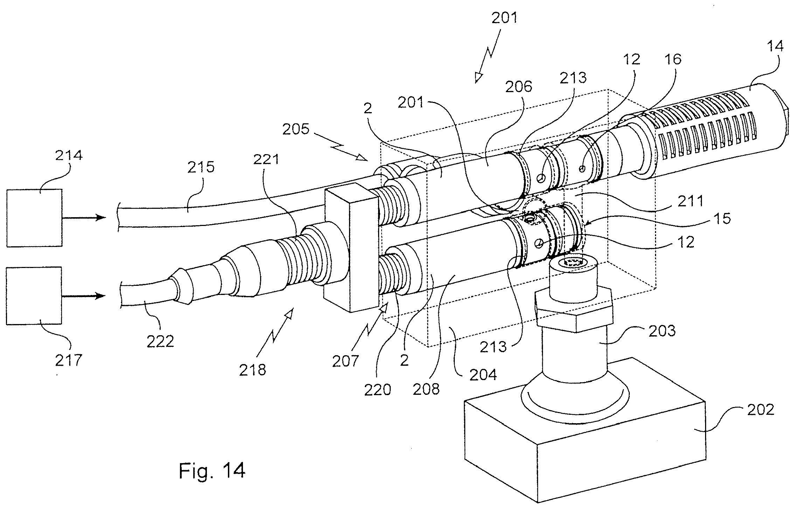

On décrit maintenant un dispositif de préhension à ventouse de l'invention 201, visible sur la figure 14. Le dispositif de préhension 201 est destiné à effectuer une manipulation ou une préhension d'un produit 202 comportant une surface sur laquelle est appliquée une ventouse 203. Pour cela, le dispositif de préhension 201 de l'invention est ici adapté à aspirer de l'air contenu dans l'intérieur de la ventouse 203 lorsque la manipulation ou la préhension est commandée, ou à souffler de l'air dans l'intérieur de la ventouse 203 lorsque la manipulation ou la préhension est terminée et que l'on souhaite désolidariser la ventouse de la surface du produit 202.

Le dispositif de préhension de l'invention comporte un corps principal 204 dans lequel est ménagé un premier logement cylindrique 205 pour accueillir une première cartouche 206 selon le premier ou le deuxième mode de réalisation et adaptée à aspirer de l'air, et un deuxième logement cylindrique 207 pour accueillir une deuxième cartouche 208 selon le premier ou le deuxième mode de réalisation et adaptée à souffler de l'air.

La première et la deuxième cartouches 206, 208 sont introduits dans leur logement cylindrique respectif selon une direction axiale correspondant à l'axe X du corps tubulaire de surface cylindrique de chaque cartouche.

Le dispositif comporte de plus un conduit d'admission d'air comprimé 210 débouchant dans le premier logement cylindrique 205 et dans le deuxième logement cylindrique 207, une chambre de vide 211 qui débouche dans le premier logement cylindrique 205 et dans le deuxième logement cylindrique 207 et qui est mise en communication pneumatique avec l'intérieur de la ventouse 203. Le dispositif de préhension comporte de plus des moyens d'étanchéité pour interdire toute circulation d'air entre le conduit d'admission 210 et la chambre de vide 211 par le premier et le deuxième logements cylindriques 205, 207 à l'extérieur respectivement de la première et de la deuxième cartouche 206, 208. Les moyens d'étanchéité sont ici des joints annulaires 213 montés sur le corps tubulaire des première et deuxième cartouches.

Le dispositif de préhension est connecté pneumatiquement à des moyens d'alimentation pneumatique 214 via un tuyau de connexion pneumatique 215 qui débouche de manière étanche dans le conduit d'admission 210 d'air comprimé.

Le premier orifice latéral 12 de la première cartouche 206 et le premier orifice latéral 12 de la deuxième cartouche 208 sont en communication pneumatique avec le conduit d'admission 210. Le deuxième orifice latéral 16 de la première cartouche 206 et l'orifice d'évacuation 15 de la deuxième cartouche sont en communication pneumatique avec la chambre de vide.

On note ici que cet agencement est permis notamment par le fait que le corps tubulaire 2 de la deuxième cartouche 206 est moins long que celui de la première cartouche 208.

Les moyens de connexion électrique 4 de la première cartouche 206 et les moyens de connexion électrique 4 de la deuxième cartouche 208 sont reliés électriquement à des moyens de commande externes 217 via un connecteur électrique commun 218 du type « connecteur en T » du dispositif de préhension 201. Le connecteur 218 présente deux premiers éléments de connexion 220 reliés chacun aux moyens de connexion électrique 4 de l'une des cartouches et un deuxième élément 221 de connexion relié à un câble électrique 222 connecté aux moyens de commande externes 217. L'utilisation de ce connecteur commun 218 permet donc d'alimenter et de commander les cartes électriques et les électrovannes de pilotage de la première et de la deuxième cartouche en utilisant un seul câble électrique 222, ce qui présente un avantage évident en termes d'encombrement, de masse et de coût du dispositif.

On décrit maintenant le fonctionnement du dispositif de préhension de l'invention.

Le conduit d'admission 210 est constamment rempli d'air comprimé fourni par les moyens d'alimentation pneumatique 214.

Lorsque les moyens de commande externes 217 commandent une aspiration d'air, la vanne de coupure de la première cartouche 206 est ouverte, et donc la première cartouche 206 aspire l'air contenu dans la chambre de vide 211 et donc dans l'espace intérieur de la ventouse 203 qui est alors solidarisée au produit 202. L'air comprimé et l'air aspiré sont évacués du dispositif de préhension 201 via à un mélangeur 14 introduit dans la première cartouche 206. La vanne de coupure de la deuxième cartouche 208 est quant à elle fermée.

Lorsque les moyens de commande externes commandent un soufflage d'air pour désolidariser la ventouse de la surface du produit, la vanne de coupure de la première cartouche 206 est fermée et la vanne de coupure de la deuxième cartouche 208 est ouverte. La deuxième cartouche 208 souffle de l'air comprimé dans la chambre de vide 211 ce qui remplit d'air l'intérieur de la ventouse 203 et provoque la désolidarisation du produit 202 de la ventouse 203.

L'invention n'est pas limitée aux modes de mise en oeuvre particuliers qui viennent d'être décrits, mais, bien au contraire, couvre toute variante entrant dans le cadre de l'invention telle que définie par les revendications.

Bien que l'on ait décrit en détail un dispositif de préhension à ventouse, la cartouche pour circuit pneumatique de l'invention peut bien sûr être utilisée dans des applications différentes, par exemple dans un distributeur pneumatique.

## Revendications

1. Cartouche pour circuit pneumatique comportant un corps tubulaire (2) ayant une surface cylindrique permettant son insertion dans un logement cylindrique selon une direction axiale (X), la cartouche étant telle que dans ledit corps tubulaire sont intégrés coaxialement les uns aux autres:
- des moyens de connexion électrique (4) situés à une première extrémité du corps tubulaire ;
- des moyens de pilotage alimentés et commandés via les moyens de connexion électrique (4) ;
- une première chambre (6) comportant un premier orifice latéral (12) d'admission d'air comprimé ;
- au moins une deuxième chambre (8) située à une deuxième extrémité du corps tubulaire et comportant un orifice de sortie d'air (16 ; 15) ;
les moyens de pilotage étant adaptés à mettre sélectivement en communication pneumatique la première chambre et la deuxième chambre de manière à autoriser un passage d'air vers la deuxième chambre.

2. Cartouche pour circuit pneumatique selon la revendication 1, dans laquelle la première chambre comporte une vanne de coupure (7, 103) pilotée par les moyens de pilotage.

3. Cartouche selon l'une des revendications précédentes, dans laquelle la deuxième chambre (8) comporte des moyens de génération de vide, et dans lequel la deuxième chambre comporte un deuxième orifice latéral (16) utilisé pour aspirer de l'air.

4. Cartouche selon la revendication 3, dans laquelle les moyens de génération de vide fonctionnent selon l'effet Venturi, dans laquelle la deuxième chambre comporte une buse (13) débouchant dans la première chambre et dans la deuxième chambre, et dans laquelle un mélangeur (14) coaxial à la buse s'étend partiellement dans la deuxième chambre au voisinage du deuxième orifice latéral.

5. Cartouche selon la revendication 4, dans laquelle la buse est rapportée dans la deuxième chambre.

6. Cartouche selon la revendication 1, dans laquelle un deuxième orifice latéral de la deuxième chambre est utilisé pour souffler de l'air.

7. Cartouche selon l'une des revendications précédentes, dans laquelle les moyens de pilotage comportent une vanne de pilotage (34) de type à deux orifices et deux positions ou de type à trois orifices et deux positions.

8. Cartouche selon la revendication 7, dans laquelle la vanne de pilotage (34) est une électrovanne.

9. Cartouche selon l'une des revendications précédentes, dans laquelle les moyens de pilotage comportent une carte électrique (35) de pilotage connectée aux moyens de connexion électrique.

10. Cartouche selon l'une des revendications précédentes comportant un premier module (403) de commande et un deuxième module (404) de génération de vide séparables, la cartouche étant telle que, lorsque le premier module et le deuxième module sont associés, la cartouche est adaptée à être commandé via les moyens de connexion électrique pour sélectivement générer du vide.

11. Cartouche selon la revendication 10, dans laquelle le premier module (403) comporte les moyens de pilotage (405), les moyens de connexion électrique (410) et la première chambre (406), et dans laquelle des moyens de génération de vide (413, 415) sont agencés dans le deuxième module (404).

12. Cartouche selon la revendication 10, dans laquelle, lorsque le deuxième module (404) est séparé de la cartouche, la cartouche est adaptée à souffler de l'air et le premier module (403) est adapté à être associé à un embout de réglage (421) permettant de régler le débit d'air soufflé par la cartouche.

13. Cartouche selon la revendication 10, dans laquelle, lorsque le premier module (403) est séparé de la cartouche, la cartouche est adaptée à générer du vide et le deuxième module (404) est adapté à être associé à une interface pneumatique (423) permettant de relier directement une arrivée d'air comprimé à la cartouche.

14. Dispositif de préhension à ventouse, comportant une cartouche (206) selon l'une des revendications précédentes et adaptée à générer du vide, le dispositif comportant un corps (204) dans lequel est ménagé un logement d'accueil (205) pour accueillir la cartouche, un conduit d'admission d'air comprimé (210) débouchant dans le logement (205), une chambre de vide (211) qui débouche dans le logement d'accueil et qui est mise en communication pneumatique avec au moins une ventouse (203), des moyens d'étanchéité (213) pour interdire toute circulation d'air entre le conduit d'admission et la chambre de vide par le logement d'accueil à l'extérieur de la cartouche, le dispositif étant agencé de sorte que :
- le premier orifice latéral (12) de la cartouche est en communication pneumatique avec le conduit d'admission ;
- le deuxième orifice latéral (16) de la deuxième chambre de la cartouche est en communication pneumatique avec la chambre de vide ;
- le dispositif est commandé par des moyens de commande externe (214) via les moyens de connexion électrique (4) de la cartouche.

15. Dispositif de préhension à ventouse selon la revendication 10, dans lequel les moyens d'étanchéité sont montés sur le corps tubulaire de la cartouche.

16. Dispositif de préhension à ventouse selon la revendication 11, équipé d'une première cartouche selon l'une des revendications précédente et adaptée à générer du vide, et d'une deuxième cartouche selon l'une des revendications précédentes et adaptée à souffler de l'air 6, la première cartouche (206) étant destinée à aspirer de l'air de la chambre de vide (211) pour effectuer une préhension d'un objet sur lequel la ventouse (203) est appliquée, et la deuxième cartouche (208) étant destinée à souffler de l'air dans la chambre de vide pour séparer l'objet et la ventouse.

17. Dispositif de préhension à ventouse selon la revendication 16 comportant un connecteur électrique commun (218) auquel sont connectés les moyens de connexion électrique (4) de la première cartouche (206) et de la deuxième cartouche (208), le dispositif de préhension étant connecté aux moyens de commande externe via ce connecteur commun.

## Patentansprüche

1. Kartusche für einen pneumatischen Schaltkreis, umfassend einen rohrförmigen Körper (2), der eine zylindrische Oberfläche hat, die sein Einfügen in eine zylindrische Aufnahme in einer axialen Richtung (X) ermöglicht, wobei die Kartusche derart ist, dass in dem genannten rohrförmigen Körper koaxial zueinander integriert sind:
- elektrische Verbindungsmittel (4), die sich an einem ersten Ende des rohrförmigen Körpers befinden;
- Steuermittel, die über die elektrischen Verbindungsmittel (4) gespeist und gesteuert werden;
- eine erste Kammer (6), die eine erste seitliche Öffnung (12) zum Einlass von Druckluft umfasst;
- mindestens eine zweite Kammer (8), die sich an einem zweiten Ende des rohrförmigen Körpers befindet und eine Luftauslassöffnung (16; 15) umfasst;
wobei die Steuermittel dazu geeignet sind, die erste Kammer und die zweite Kammer selektiv in pneumatische Verbindung zu bringen, um einen Luftdurchtritt in Richtung der zweiten Kammer zu gestatten.

2. Kartusche für einen pneumatischen Schaltkreis nach Anspruch 1, bei der die erste Kammer eine Absperrarmatur (7, 103) umfasst, die von den Steuermitteln gesteuert wird.

3. Kartusche nach einem der vorhergehenden Ansprüche, bei der die zweite Kammer (8) Vakuumerzeugungsmittel umfasst, und bei der die zweite Kammer eine zweite seitliche Öffnung (16) umfasst, die zum Ansaugen von Luft verwendet wird.

4. Kartusche nach Anspruch 3, bei der die Vakuumerzeugungsmittel nach dem Venturi-Effekt arbeiten, bei der die zweite Kammer eine Düse (13) umfasst, die in die erste Kammer und in die zweite Kammer mündet, und bei der sich ein zur Düse koaxialer Mischer teilweise in der zweiten Kammer nahe der zweiten seitlichen Öffnung erstreckt.

5. Kartusche nach Anspruch 4, bei der die Düse in der zweiten Kammer befestigt ist.

6. Kartusche nach Anspruch 1, bei der eine zweite seitliche Öffnung der zweiten Kammer zum Einblasen von Luft verwendet wird.

7. Kartusche nach einem der vorhergehenden Ansprüche, bei der die Steuermittel ein Steuerventil (34) vom Typ mit zwei Öffnungen und zwei Positionen oder vom Typ mit drei Öffnungen und zwei Positionen umfassen.

8. Kartusche nach Anspruch 7, bei der das Steuerventil (34) ein Elektroventil ist.

9. Kartusche nach einem der vorhergehenden Ansprüche, bei der die Steuermittel eine elektrische Steuerkarte (35) umfassen, die mit den elektrischen Verbindungsmitteln verbunden ist.

10. Kartusche nach einem der vorhergehenden Ansprüche, umfassend ein erstes Steuermodul (403) und ein zweites Vakuumerzeugungsmodul (404), die getrennt werden können, wobei die Kartusche derart ist, dass, wenn das erste Modul und das zweite Modul verbunden sind, die Kartusche dazu geeignet ist, über die elektrischen Verbindungsmittel gesteuert zu werden, um selektiv ein Vakuum zu erzeugen.

11. Kartusche nach Anspruch 10, bei der das erste Modul (403) die Steuermitte! (405), die elektrischen Verbindungsmittel (410) und die erste Kammer (406) umfasst, und bei der die Vakuumerzeugungsmittel (413, 415) in dem zweiten Modul (404) angeordnet sind.

12. Kartusche nach Anspruch 10, bei der, wenn das zweite Modul (404) von der Kartusche getrennt ist, die Kartusche dazu geeignet ist, Luft einzublasen, und das erste Modul (403) dazu geeignet ist, mit einem Einstellanschlussstutzen (421) verbunden zu werden, der ein Einstellen der von der Kartusche eingeblasenen Luftmenge ermöglicht.

13. Kartusche nach Anspruch 10, bei der, wenn das erste Modul (403) von der Kartusche getrennt ist, die Kartusche dazu geeignet ist, ein Vakuum zu erzeugen, und das zweite Modul (404) dazu geeignet ist, mit einer pneumatischen Schnittstelle (423) verbunden zu werden, die ein direktes Verbinden eines Drucklufteinlasses mit der Kartusche ermöglicht.

14. Sauggreifervorrichtung, umfassend eine Kartusche (206) nach einem der vorhergehenden Ansprüche, die dazu geeignet ist, ein Vakuum zu erzeugen, wobei die Vorrichtung einen Körper (204) umfasst, in dem eine Aufnahme (205) ausgebildet ist, um die Kartusche aufzunehmen, eine Drucklufteinlassleitung (210), die in die Aufnahme (205) mündet, eine Vakuumkammer (211), die in die Aufnahme mündet und die mit mindestens einem Sauger (203) in pneumatische Verbindung gebracht wird, Dichtungsmittel (213), um jegliche Luftzirkulation zwischen der Einlassleitung und der Vakuumkammer durch die Aufnahme außerhalb der Kartusche zu verhindern, wobei die Vorrichtung so ausgebildet ist, dass:
- die erste seitliche Öffnung (12) der Kartusche in pneumatischer Verbindung mit der Einlassleitung steht;
- die zweite seitliche Öffnung (16) der zweiten Kammer der Kartusche in pneumatischer Verbindung mit der Vakuumkammer steht;
- die Vorrichtung von externen Steuermitteln (214) über die elektrischen Verbindungsmittel (4) der Kartusche gesteuert wird.

15. Sauggreifervorrichtung nach Anspruch 10, bei der die Dichtungsmittel an dem rohrförmigen Körper der Kartusche angebracht sind.

16. Sauggreifervorrichtung nach Anspruch 11, die mit einer ersten Kartusche nach einem der vorhergehenden Ansprüche ausgestattet ist, welche dazu geeignet ist, ein Vakuum zu erzeugen, sowie mit einer zweiten Kartusche nach einem der vorhergehenden Ansprüche, welche dazu geeignet ist, Luft einzublasen, wobei die erste Kartusche (206) dazu bestimmt ist, Luft aus der Vakuumkammer (211) zu saugen, um ein Ergreifen eines Objektes, an dem der Sauger (203) angelegt ist, zu bewirken, und wobei die zweite Kartusche (208) dazu bestimmt ist, Luft in die Vakuumkammer einzublasen, um das Objekt und den Sauger zu trennen.

17. Sauggreifervorrichtung nach Anspruch 16, umfassend einen gemeinsamen elektrischen Verbinder (218), mit dem die elektrischen Verbindungsmittel (4) der ersten Kartusche (206) und der zweiten Kartusche (208) verbunden sind, wobei die Greifvorrichtung über diesen gemeinsamen Verbinder mit den externen Steuermitteln verbunden ist.

## Claims

1. A cartridge for a pneumatic circuit comprising a tubular body (2) having a cylindrical surface enabling it to be inserted in a cylindrical housing in an axial direction (X), the cartridge being such that, in said tubular body, the following are integrated coaxially with one another:
- electrical connection means (4) situated at a first end of the tubular body;
- control means supplied and controlled via the electrical connection means (4);
- a first chamber (6) comprising a first lateral orifice (12) for admitting compressed air;
- at least a second chamber (8) situated at a second end of the tubular body and comprising an air outlet orifice (16; 15).
the control means being suitable for selectively putting the first chamber and the second chamber in pneumatic communication so as to allow passage of air to the second chamber.

2. A cartridge for a pneumatic circuit according to claim 1, in which the first chamber comprises a cutoff valve (7, 103) controlled by the control means.

3. A cartridge according to one of the preceding claims, in which the second chamber (8) comprises vacuum-generating means, and in which the second chamber comprises a second lateral orifice (16) used for aspirating air.

4. A cartridge according to claim 3, in which the vacuum-generating means function according to the venturi effect, in which the second chamber comprises a nozzle (13) emerging in the first chamber and in the second chamber, and in which a mixer (14) coaxial with the nozzle extends partially in the second chamber in the vicinity of the second lateral orifice.

5. A cartridge according to claim 4, in which the nozzle is attached in the second chamber.

6. A cartridge according to claim 1, in which a second lateral orifice of the second chamber is used to blow air.

7. A cartridge according to any one of the preceding claims, in which the control means comprise a control valve (34) of the type with two orifices and two positions or of the type with three orifices and two positions.

8. A cartridge according to claim 7, in which the control valve (34) is a solenoid valve.

9. A cartridge according to any one of the preceding claims, in which the control means comprise an electrical control card (35) connected to the electrical connection means.

10. A cartridge according to one of the preceding claims, comprising a first control module (403) and a second vacuum-generating module (404) that can be separated, the cartridge being such that, when the first module and the second module are associated, the cartridge is suitable for being controlled via the electrical connection means in order to selectively generate vacuum.

11. A cartridge according to claim 10, in which the first module (403) comprises the control means (405), the electrical connection means (410) and the first chamber (406), and in which vacuum-generating means (413, 415) are arranged in the second module (404).

12. A cartridge according to claim 10, in which, when the second module (404) is separated from the cartridge, the cartridge is suitable for blowing air and the first module (403) is suitable for being associated with a regulating connection piece (421) for regulating the flow of air blown by the cartridge.

13. A cartridge according to claim 10, in which, when the first module (403) is separated from the cartridge, the cartridge is suitable for generating vacuum and the second module (404) is suitable for being associated with a pneumatic interface (423) for directly connecting a compressed-air inlet to the cartridge.

14. A sucker gripping device, comprising a cartridge (206) according to one of the preceding claims and suitable for generating vacuum, the device comprising a body (204) in which a housing (205) is provided for accommodating the cartridge, a compressed-air inlet pipe (210) emerging in the housing (205), a vacuum chamber (211) that emerges in the accommodating housing and which is put in pneumatic communication with at least one sucker (203), and sealing means (213) for preventing any circulation of air between the inlet pipe and the vacuum chamber through the accommodating housing outside the cartridge, the device being arranged so that:
- the first lateral orifice (12) of the cartridge is in pneumatic communication with the inlet pipe;
- a second lateral orifice (16) of the second chamber of the cartridge that is in pneumatic communication with the vacuum chamber;
- the device is controlled by external control means (214) via the electrical connection means (4) of the cartridge.

15. A sucker gripping device according to claim 10, in which the sealing means are mounted on the tubular body of the cartridge.

16. A sucker gripping device according to claim 11, equipped with a first cartridge according to one of the preceding claims and suitable for generating vacuum, and a second cartridge according to one of the preceding claims and suitable for blowing air 6, the first cartridge (206) being intended to aspirate air from the vacuum chamber (211) in order to grip an object on which the sucker (203) is applied, and the second cartridge (208) being intended to blow air into the vacuum chamber in order to separate the object and the sucker.

17. A sucker gripping device according to claim 16, comprising a common electrical connector (218) to which the electrical connection means (4) of the first cartridge (206) and of the second cartridge (208) are connected, the gripping device being connected to the external control means via this common collector.
